(19) Europäisches Patentamt
European Patent Office
Office européen des brevets

(11) Veröffentlichungsnummer: **0 146 021**
**B1**

(12) # EUROPÄISCHE PATENTSCHRIFT

(45) Veröffentlichungstag der Patentschrift: **03.06.87**

(21) Anmeldenummer: **84114312.6**

(22) Anmeldetag: **27.11.84**

(51) Int. Cl.⁴: **C 08 L 69/00,** C 08 L 25/12, C 08 L 51/00 // (C08L69/00, 25:12, 51:00),(C08L25/12, 69:00, 51:00),(C08L51/00, 69:00, 25:12)

(54) **Verfahren zur Herstellung und/oder Weiterverarbeitung von Polymerischungen.**

(30) Priorität: **07.12.83 DE 3344102**

(43) Veröffentlichungstag der Anmeldung: **26.06.85 Patentblatt 85/26**

(45) Bekanntmachung des Hinweises auf die Patenterteilung: **03.06.87 Patentblatt 87/23**

(84) Benannte Vertragsstaaten: **DE FR GB IT NL**

(56) Entgegenhaltungen:
**GB - A - 2 118 194**
**US - A - 4 172 103**

(73) Patentinhaber: **BAYER AG, Konzernverwaltung RP Patentabteilung, D-5090 Leverkusen 1 Bayerwerk (DE)**

(72) Erfinder: **Serini, Volker, Dr., Scheiblerstrasse 81, D-4150 Krefeld (DE)**
Erfinder: **Lindner, Christian, Dr., Riehler Strasse 200, D-5000 Koeln 60 (DE)**
Erfinder: **Peters, Horst, Dr., Winterberg 25, D-5090 Leverkusen 3 (DE)**
Erfinder: **Nising, Wolfgang, Dr., Mainstrasse 4, D-5205 St. Augustin 2 (DE)**

**EP 0 146 021 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Mischungen von Styrol/Acrylnitril-Polymeren mit Polycarbonaten auf Basis tetraalkylierter Diphenole sind bekannt. (Siehe beispielsweise DE-OS 2 329 585, DE-OS 2 329 646 und DE-OS 3 118 861). Derartige Mischungen mit Styrol/Acrylnitril-Copolymeren zeigen zwar eine gewisse Verträglichkeit, bilden jedoch bei Raumtemperatur und auch im Zustand der Schmelze getrennte Phasen, sofern man handelsübliche Styrol/Acrylnitril-Copolymere eingesetzt, deren Styrol/Acrylnitril-Verhältnis bei etwa maximal 75 Gew.-% : 25 Gew.-% liegt.

Analoges gilt für Abmischungen dieser Polycarbonate mit entsprechenden Styrol/Acrylnitril-Pfropfpolymerisaten auf Kautschuke, deren Styrol/Arcylnitril-Verhältnis ebenfalls, wie oben dargelegt, bei etwa 75 : 25 liegt [siehe auch G. Humme, H. Röhr und V. Serini, Angew. Makrom. Chem. 58/59 (1977), 85-94].

Die Herstellung derartiger Mischungen erfolgte bei Temperaturen bis zu 260°C (bzw. bis zu 250°C) [siehe DE-OS 2 329 646, Seite 30 und DE-OS 2 329 585, Seite 12].

Demgegenüber verhalten sich Abmischungen aus Tetramethylbisphenol-A-Polycarbonaten mit Polystyrolen völlig anders, da sie bei Temperaturen bis zu ca. 240°C in allen Gewichtsverhältnissen einphasige Mischungen bilden, die sich jedoch oberhalb dieser Temperatur in zwei Phasen entmischen [R. Casper, L. Morbitzer, Angew. Makrom. Chem. 58/59 (1977) 1-35].

Für die Herstellung dararartiger einphasiger Mischungen aus Tetramethylbisphenol-A-Polycarbonaten mit Polystyrolen war daher eine höhere Mischungstemperatur nicht angeraten, da die spätere Abkühlung für die Rückbildung des stabilen einphasigen Zustandes zu schnell erfolgt.

Abmischungen von Tetramethylbisphenol-F enthaltenden Polycarbonaten sind mit Polystyrol im allgemeinen nicht mehr einphasig mischbar. Die Wahl der Mischungstemperatur ist somit für dieses System nicht mit der vorstehenden Problematik behaftet.

Es wurde nun gefunden, dass durch den Einbau geringer Mengen (1,5 bis 15 Gew.-%) an Acrylnitril in die Styrol-Polymerisate Mischbarkeit mit den in Rede stehenden Tetramethylbisphenol-F-enthaltenden Polycarbonaten erzielt wird, welche auch oberhalb der in den eingangs genannten deutschen Offenlegungsschriften angewandte Mischungstemperaturen erhalten bleibt; dies war in Anbetracht der Entmischungstendenz von den obigen vergleichbaren einphasigen Mischungen aus Polystyrol und Tetramethylbisphenol-A-Polycarbonaten nicht zu erwarten. Somit besteht die Möglichkeit, bei höheren Temperaturen einphasige Mischungen der genannten Art herzustellen und zu verarbeiten.

Gegenstand der vorliegenden Erfindung ist somit ein Verfahren zur Herstellung von Polymermischungen aus

A - 1 bis 99 Gew.-% eines thermoplastischen aromatischen Tetramethylbisphenol-F-enthaltenden Polycarbonats mit mittleren Molekulargewichten $\bar{M}_w$ (Gewichtsmittel) von 10 000 bis 200 000 mit

B - 99 bis 1 Gew.-% eines Styrol/Acrylnitril-Copolymeren und/oder mit

C - 99 bis 1 Gew.-% eines Pfropfpolymerisates, bestehend aus 5 bis 95 Gew.-% eines Styrol/Acrylnitril-Copolymeren und 95 bis 5 Gew.-% eines Butadienkautschuks mit 0 bis 50 Gew.-% an Comonomeren neben Butadien, eines Ethylen-Propylen-Dien-Kautschuks oder eines Kautschuks aus Acrylaten mit 0 bis 30 Gew.-% anderer Comonomerer, hergestellt durch Polymerisation von Styrol/Acrylnitril-Gemischen in Gegenwart eines der genannten Kautschuke,

wobei die Summe der Komponenten A + B + C jeweils 100 Gew.-% ist, auf Extrudern oder Knetern das dadurch gekennzeichnet ist, dass

1) das aromatische Polycarbonat (A) mindestens 80 Gew.-% wiederkehrende Struktureinheiten der Formeln 1 und gegebenenfalls 2

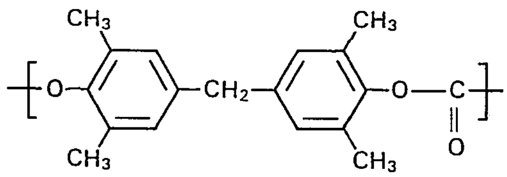

(1)

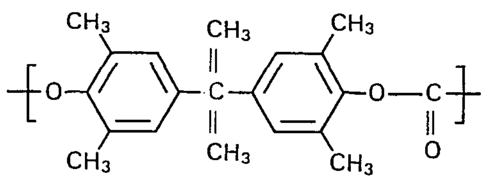

(2)

und höchstens 20 Gew.-% wiederkehrende Struktureinheiten der Formel 3 enthält,

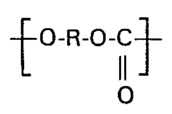

(3)

worin -O-R-O ein Diphenolatrest mit Ausnahme der Strukturen (1) und (2) ist, und wobei die wiederkehrenden Struktureinheiten der Formel 1 mindestens 25 Gew.-% des aromatischen Polycarbonats betragen müssen, und dass

2) der Acrylnitrilanteil im Styrol/Acrylnitril-Copolymeren der Komponenten B und C jeweils 1,5-15 Gew.-% beträgt, und dass man

3) bei Temperaturen von über 270°C, vorzugsweise von 270°C bis 340°C, und insbesondere von 280°C bis 330°C vermischt.

Gegenstand der vorliegenden Erfindung ist ausserdem ein Verfahren zur Weiterverarbeitung von Polymermischungen bestehend aus den vorstehend genannten Komponenten A und B und/oder C zu Formkörpern auf Extrudern, Spritzgiessmaschinen oder Hochtemperaturpressen, das dadurch gekennzeichnet ist, dass man die Polymermischungen bei Temperaturen von über 270°C, vorzugsweise von 270°C bis 340°C, und insbesondere von 280°C bis 330°C verformt.

Eine Verarbeitung derartiger Abmischungen, beispielsweise das Verspritzen zu Prüfkörpern war bislang eher für niedrigere Temperaturen bis max. 260°C empfohlen (DE-OS 2 329 585, Seiten 15 und 21).

Die erfindungsgemäss als Komponente A geeigneten thermoplastischen Polycarbonate auf Basis von Bis-(3,5-dimethyl-4-hydroxyphenyl)-methan haben mittlere Molekulargewichte $\overline{M}_w$ (Gewichtsmittel, bestimmt nach der Lichtstreumethode) von 10 000 bis 200 000, vorzugsweise von 20 000 bis 80 000 und insbesondere von 25 000 bis 60 000.

In den anderen Carbonatsstruktureinheiten der Strukturformel 3

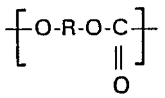

(3)

ist -O-R-O- ein Diphenolat-Rest mit Ausnahme gemäss Strukturen 1 und 2, der vorzugsweise 6 bis 30 C-Atome hat.

Die erfindungsgemäss verwendeten Polycarbonatkomponenten A können in bekannter Weise durch den Einbau von Verzweigern verzweigt sein.

Die Herstellung der erfindungsgemäss verwendbaren Polycarbonate ist bekannt und beispielsweise in der eingangs erwähnten DE-OS 2 329 585 beschrieben.

Geeignete andere Diphenole HO-R-OH (4) als Bis-(4-hydroxy-3,5-dimethylphenyl)-methan und 2,2--Bis(4-hydroxy-3,5-dimethyl-phenyl)-propan sind beispielsweise Hydrochinon, Resorcin, Dihydrodiphenyle, Bis-(hydroxyphenyl)-alkane, Bis-(hydroxyphenyl)-cycloalkane, Bis-(hydroxy-phenyl)-ether, Bis-(hydroxyphenyl)-ketone und α, α'-Bis-(hydroxyphenyl)-diisopropylbenzole, sowie deren kernalkylierte und kernhalogenierte Abkömmlinge. Diese und weitere geeignete Diphenole sind beispielsweise in der Monographie Hermann Schnell, Chemistry and Physics of Polycarbonates, in der Veröffentlichung V. Serini, D. Freitag, H. Vernaleken, Polycarbonate aus o,o,o',o'-tetramethyl-substituierten Bisphenolen, Angew. Makrom. Chem. 55 (1976), 175-189, und in den DE-OS 2 063 050, 2 211 957, 2 615 038 und 2 248 817 beschrieben.

Bevorzugte andere Diphenole (4) sind 2,2-Bis--(4-hydroxyphenyl)-propan, Bis-(4-hydroxyphenyl), 1,1-Bis-(4-hydroxyphenyl)-cyclohexan, α, α'-Bis-(4--hydroxyphenyl)-p-diisopropylbenzol, 2,2-Bis-(3--methyl-4-hydroxyphenyl)-propan, 2,2-Bis-(4-hydroxy-3,5-dichlorphenyl)-propan, 2,2-Bis-(4-hydroxy-3,5-dibromphenyl)-propan und 1,1,3,4,6--Pentamethyl-3-(3,5-dimethyl-4-hydroxyphenyl)-indan-5-ol.

Die erfindungsgemäss als Komponente B geeigneten Styrol/Acrylnitril-Copolymeren sind durch Copolymerisation von Styrol und Acrylnitril herstellbare Copolymere mit 1,5 bis 15 Gew.-% eingebautem Acrylnitril. Die Copolymerisation kann radikalisch erfolgen. Bevorzugte Styrol/Acrylnitril-Copolymere enthalten 6 bis 13 Gew.-% Acrylnitril, besonders bevorzugte 7 bis 10 Gew.-% Acrylnitril.

Die Molekulargewichte dieser Styrol/Acrylnitril-Copolymeren können in weiten Bereichen variiert werden.

Üblicherweise sollen die Molekulargewichte, ausgedrückt als Gewichtsmittel, im Bereich von 30 000 bis 600 000 liegen. Die molekulare Uneinheitlichkeit der Styrol/Acrylnitril-Copolymeren, ausgedrückt durch den Wert

$$\frac{\overline{M}_w}{\overline{M}_n} - 1 = U_n,$$

ist unkritisch. Sie liegt normalerweise im Bereich von $U_n$ = 0,5 bis 3,5 und ist durch den Herstellprozess und die Herstellungsbedingungen variierbar.

Die Styrol/Acrylnitril-Copolymeren lassen sich prinzipiell nach bekannten Verfahren herstellen, z.B. durch Masse-, Lösungs-, Suspensions- oder Emulsionspolymerisation, wobei allerdings Verfahrensbedingungen eingehalten werden müssen, die zur Copolymerisation der Monomeren Styrol und Acrylnitril unter Bildung von Styrol/Acrylnitril-Copolymeren mit 1,5 bis 15 Gew.-% an eingebautem Acrylnitril notwendig sind. Bevorzugte Herstellverfahren sind die der Emulsions-, der Lösungs- und der Massecopolymerisation. Neben diskontinuierlicher Durchführung der Copolymerisation kann diese auch kontinuierlich durchgeführt werden. Die kontinuierliche Reaktionsführung ist besonders vorteilhaft.

Die erfindungsgemäss geeigneten Styrol/Acrylnitril-Copolymeren besitzen im allgemeinen einen linearen, unvernetzten Aufbau. Zur Herstellung der erfindungsgemässen Polymermischungen lassen sich aber auch Styrol/Acrylnitril-Copolymere mit einem verzweigten Aufbau verwenden.

Die erfindungsgemäss als Komponente C geeigneten Pfropfpolymerisate sind Pfropfpolymerisate, bestehend aus 5 bis 95 Gew.-% eines Styrol/Acrylnitril-Copolymeren und 95 bis 5 Gew.-% eines Kautschuks. Das Styrol/Acrylnitril-Copolymere enthält 1,5 bis 15 Gew.-% Acrylnitril, bevorzugt 6 bis 13 Gew.-% Acrylnitril, und insbesondere 7 bis 10 Gew.-% Acrylnitril eingebaut. Das Pfropfpolymerisat wird bevorzugt durch radikalische Copolymerisation der Pfropfmonomeren Styrol und Acrylnitril in Anwesenheit des Kautschuks, der die Pfropfbasis darstellt, erhalten. Der Kautschuk, der als Pfropfbasis dient, kann ein Butadien-Kautschuk sein, hergestellt aus Butadien mit bis zu 50 Gew.-% an Comonomeren. Bevorzugte Kautschuke dieser Art sind Butadien-Styrol- und Butadien-Acrylnitril-Copolymere, sowie insbesondere Polybutadien. Weiterhin als Pfropfbasis einsetzbare Kautschuke sind kautschukartige Acrylester-Copolymere sowie EPDM-Terpolymere.

Die Pfropfpolymerisation der Monomeren Styrol

und Acrylnitril auf den Kautschuk ist nach bekannten Verfahren so durchzuführen, dass die Harzkomponente der Pfropfpolymerisate das gewünschte Styrol/Acrylnitril-Verhältnis, im Rahmen der erfindungsgemässen Verhältnisse Styrol zu Acrylnitril, aufweist. Bevorzugte Pfropfpolymerisate enthalten 65 bis 90 Gew.-% Kautschuk und 35 bis 10 Gew.-% Styrol/Acrylnitril-Copolymer. Ebenfalls bevorzugte Pfropfpolymerisate enthalten 15 bis 50 Gew.-% Kautschuk und 85 bis 50 Gew.-% Styrol/Acrylnitril-Copolymer.

Die Herstellung der erfindungsgemäss einsetzbaren Pfropfpolymerisate ist bekannt. So kann man die Pfropfmonomeren in Gegenwart eines Latex der Pfropfbasis in Emulsion mit radikalischen Initiatoren polymerisieren. Ist die Pfropfbasis anvernetzt und werden bestimmte Pfropfmonomer-Pfropfbasis-Verhältnisse eingehalten , so ist die Teilchengrösse des Latex der Pfropfbasis auch bestimmend für die Grösse des Pfropfkautschukteilchens. Die Pfropfhülle besteht aus chemisch an die Kautschukteilchen gebundenen Ketten des Polymerisats der Pfropfmonomeren.

Die Pfropfreaktion ist unvollständig. Neben dem eigentlichen Pfropfkautschukteilchen entsteht auch das nicht gepropfte Copolymere der Pfropfmonomeren. Beides zusammen wird in dieser Anmeldung als Pfropfpolymerisat bezeichnet. Man kann Pfropfpolymerisate auch durch Masse-Lösung- oder Masse-Suspensions-Polymerisation herstellen, wenn man von einem monomerlöslichen Kautschuk ausgeht. Die Grösse der Pfropfkautschukteilchen wird dann durch die Phaseninversion festgelegt und kann sowohl mechanisch durch Rühren als auch durch chemische Beeinflussung des Phasengleichgewichts (Zusatz von Dispergatoren) variiert werden. Im allgemeinen werden so Teilchen $\geq$ 1 μm erhalten.

Man kann Pfropfpolymerisate verwenden, deren Pfropfkautschukteilchen einen Durchmesser von 0,05 bis 10 μm haben, wobei ein erheblicher Teil der Pfropfmonomeren im Inneren des Pfropfkautschukteilchens als Copolymerisat includiert sein kann. Bevorzugt sind Teilchendurchmesser von 0,05 bis 1,2 μm bzw. 0,05 bis 0,6 μm. Es ist auch möglich, mehrere und voneinander verschiedene Pfropfpolymerisate nebeneinander einzusetzen, die sich zu.B. durch den Pfropfgrad, die Pfropfdichte und die Pfropfkautschukteilchendurchmesser unterscheiden können. Besonders geeignet ist beispielsweise ein Gemisch aus einem Pfropfpolymerisat mit Pfropfkautschukteilchen eines $d_{50}$-Wertes von 0,35 bis 10 μm und einem Pfropfpolymerisat mit Pfropfkautschukteilchen eines mittleren Teilchendurchmessers $d_{50}$ von 0,05 bis 0,32 μm, d.h. ein sogenanntes Bimodal-System. Unter Teilchendurchmesser $d_{50}$ wird der mittlere Durchmesser verstanden, oberhalb dessen und unterhalb dessen die Durchmesser von jeweils 50% der Teilchen liegen.

Für das erfindungsgemässe Verfahren zur Herstellung oder Weiterverarbeitung sind besonders folgende Kombinationen geeignet:

1. Polymerkombination aus 70 bis 90 Gew.-% eines unter A aufgeführten Polycarbonats mit 30 bis 10 Gew.-% eines unter C aufgeführten Pfropfpolymerisats, das 65 bis 90 Gew.-% Kautschuk und 35 bis 10 Gew.-% Styrol/Acrylnitril-Copolymer enthält.

2. Polymerkombination eines unter A aufgeführten Polycarbonats, eines unter B aufgeführten Styrol/Acrylnitril-Copolymeren und eines unter C aufgeführten Pfropfpolymerisats, in der A und B jeweils mindestens 10 Gew.-%, A und B zusammen 65 bis 90 Gew.-% und C 10 bis 35 Gew.-% betragen, und in der C aus 65 bis 90 Gew.-% Kautschuk und 35 bis 10 Gew.-% Styrol/Acrylnitril-Copolymerisat besteht.

3. Polymerkombination aus 10 bis 60 Gew.-% eines unter A aufgeführten Polycarbonats und 90 bis 40 Gew.-% eines unter B aufgeführten Styrol/Acrylnitril-Copolymeren.

4. Polymerkombination aus 20 bis 60 Gew.-% eines unter A aufgeführten Polycarbonats und 80 bis 40 Gew.-% eines unter B aufgeführten Pfropfpolymerisats, dessen Anteil an Kautschuk 15 bis 50 Gew.-% und an Kautschuk 15 bis 50 Gew.-% und an Styrol/Acrylnitril-Copolymerem 85 bis 50 Gew.-% beträgt.

Das erfindungsgemässe Verfahren zur Herstellung und/oder Weiterverarbeitung der Polymermischungen aus den Komponenten A und B, welche einphasig sind, beziehungsweise aus den Komponenten A und C, beziehungsweise aus den Komponenten A, B und C, welche eine einphasige thermoplastische Polymermatrix haben, ermöglicht eine schnellere und trotzdem sichere Herstellung von Polymermischungen bzw. von Formkörpern mit einer guten Eigenschaftskombination, was bei den höheren Verfahrenstemperaturen nicht zu erwarten war.

Den erfindungsgemäss hergestellten Polymermischungen können noch die üblichen Additive, Verstärkungsmittel, Formtrennmittel, Stabilisatoren u.a. vor deren Herstellung oder vor deren Weiterverarbeitung zugeschlagen werden.

Die erfindungsgemäss hergestellten Polymermischungen bzw. Formkörper finden in bekannter Weise Verwendung in Anwendungen, bei denen ständiger Kontakt mit heissen wässrigen Lösungen oder heissem Wasser zu erwarten ist, so z.B. für Waschmaschinen, Heisswasserkocher, Geschirr. Sie eignen sich weiterhin hervorragend im Automobilsektor, wo günstiges Bruchverhalten auch unter Extrembedingungen erforderlich ist, so z.B. für Armaturenbretter und Innenverkleidungen. Für Innenverkleidungen ist die gute Aufschäumbarkeit und Haftung von Polyurethanschäumen auf den Polymermischungen dieser Erfindung besonders vorteilhaft.

Wegen der hohen Oberflächengüte und des geringen Ausdehnungskoeffizienten sind die Mischungen geeignet für Scheinwerferreflektoren.

Bevorzugt geeignete Polycarbonate A sind solche mit mindestens 90 Gew.-% an wiederkehrenden bifunktionellen Struktureinheiten der Formel 1 und gegebenenfalls 2, besonders bevorzugte sind solche, die an bifunktionellen Struktureinheiten nur solche der Formeln 1 und gegebenenfalls 2 enthalten.

Das Verhältnis der Struktureinheiten der Formel 1 zu denen der Formel 2 in den erfindungsgemäss geeigneten Polycarbonaten liegt zwischen 25/75

Gew.-% und 100/0 Gew.-%. Bevorzugt werden Verhältnisse von über 50 Gew.-%/50 Gew.-%, besonders bevorzugt von 100/0 Gew.-% (Struktureinheiten 1/Struktureinheiten 2).

*Beispiele 1 bis 6*

Herstellung von Mischungen aus 2,2-Bis-(3,5-dimethyl-4-hydroxyphenyl)-methan enthaltenden Polycarbonaten und Styrol/Acrylnitril-Copolymeren (SAN) sowie Styrol/Acrylnitril/Butadien-Pfropfcopolymeren (ABS).

Die in der Tabelle aufgeführten Mischungen wurden hergestellt, indem die Polycarbonate und die Copolymeren in dem angegebenen Mischungsverhältnis über einen Doppelwellenextruder bei 290 °C über die Schmelze homogen gemischt wurden. Bei 300 °C wurden aus den dabei erhaltenen Granulaten über eine Extrusionsspritzgiessmaschine Prüfkörper hergestellt. An den Granulaten und den Spritzgusskörpern wurden Differentialthermoanalysen durchgeführt. Diese zeigten, dass für die SAN enthaltenden, transparenten Granulate und Prüfkörper nur jeweils eine Glastemperatur $T_g$ erhalten wird, und dass auch die ABS enthaltenden Mischungen, die wegen der diskreten Kautschukphase trüb sind, neben der $T_g$ des Polybutadienkautschuks (ca. –80 °C) nur jeweils eine $T_g$ zeigen. Dies bedeutet Einphasigkeit der Mischungen bzw. der Matrices der Mischungen.

Die eingesetzten Polycarbonate und Copolymerisate sind wie folgt charakterisiert:

1) F 100 = 2,2-Bis-(3,5-dimethyl-4-hydroxyphenyl)-methan-Polycarbonat, $\eta_{rel}$ = 1,295 (5 g/l in $CH_2Cl_2$).

2) F 75 = Copolycarbonat aus Bis-(3,5-dimethyl-4-hydroxyphenyl)-methan und 2,2-Bis-(3,5-dimethyl-4-hydroxyphenyl)-propan, 75/25 Gew.-Teile, $\eta_{rel}$ = 1,298, (5 g/l in $CH_2Cl_2$).

3) F 50 = wie 2), jedoch Gew.-Verhältnis 50/50, $\eta_{rel}$ = 1,293 (5 g/l in $CH_2Cl_2$).

4) SAN 10 = Copolymer aus Styrol und Acrylnitril, Gew.-Verhältnis 90/10; $\eta_{rel}$ = 1,463 (5 g/l in $CH_2Cl_2$).

5) ABS 35/10 = Pfropfpolymer von Styrol und Acrylnitril im Gew.-Verhältnis 90/10 auf Polybutadienkautschuk, Polybutadienanteil 35 Gew.-% des Pfropfpolymers, Kautschukteilchengrösse ca. 0,4 µm.

TABELLE

*Beispiele 1 bis 6: Glastemperaturen $T_g$ von Polymermischungen, gemischt bei 290 °C, verarbeitet bei 300 °C*

| Beispiel | Polycarbonat | Copolymer | Mischungsverhältnis | $T_g$ Granulat (°C) | $T_g$ Prüfkörper (°C) |
|---|---|---|---|---|---|
| 1 | F 100 | SAN 10 | 50/50 | 141 | 140 |
| 2 | F 75 | SAN 10 | 50/50 | 143 | 143 |
| 3 | F 50 | SAN 10 | 50/50 | 143 | 144 |
| 4 | F 100 | ABS 35/10 | 50/50 | 151 | 152 |
| 5 | F 75 | ABS 35/10 | 50/50 | 155 | 156 |
| 6 | F 50 | ABS 35/10 | 50/50 | 159 | 159 |

**Patentansprüche**

1. Verfahren zur Herstellung von Polymermischungen aus

A - 1 bis 99 Gew.-% eines thermoplastischen, aromatischen Tetramethylbisphenol-F-enthaltenden Polycarbonats mit mittleren Molekulargewichten $\bar{M}_w$ (Gewichtsmittel) von 10 000 bis 200 000 mit

B - 99 bis 1 Gew.-% eines Styrol/Acrylnitril-Copolymeren und/oder mit

C - 99 bis 1 Gew.-% eines Pfropfpolymerisats, bestehend aus 5 bis 95 Gew.-% eines Styrol/Acrylnitril-Copolymeren und 95 bis 5 Gew.-% eines Butadienkautschuks mit 0 bis 50 Gew.-% an Comonomeren neben Butadien, eines Ethylen-Propylen-Dien-Kautschuks oder eines Kautschuks aus Acrylaten mit 0 bis 30 Gew.-% anderer Comonomerer, hergestellt durch Polymerisation von Styrol/Acrylnitril-Gemischen in Gegenwart eines der genannten Kautschuke,

wobei die Summe der Komponenten A + B + C jeweils 100 Gew.-% ist, auf Extrudern oder Knetern dadurch gekennzeichnet, dass

1) das aromatische Polycarbonat A mindestens 80 Gew.-% wiederkehrende Struktureinheiten der Formeln 1 und gegebenenfalls 2

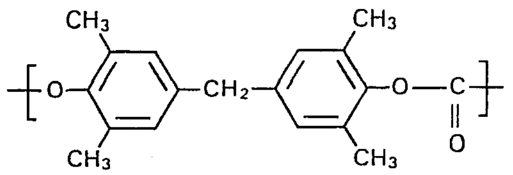

(1)

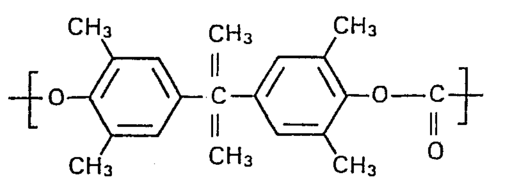

(2)

und höchstens 20 Gew.-% wiederkehrende Struktureinheiten der Formel 3 enthält,

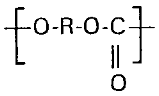 (3)

worin -O-R-O- ein Diphenolatrest mit Ausnahme der Strukturen (1) und (2) ist, und wobei die wiederkehrenden Struktureinheiten der Formel 1 mindestens 25 Gew.-% des aromatischen Polycarbonats betragen müssen, dass

2) der Acrylnitrilanteil im Styrol/Acrylnitril-Copolymeren der Komponenten B und C jeweils 1,5 bis 15 Gew.-% beträgt, und dass man

3) bei Temperaturen von über 270°C vermischt.

2. Verfahren zur Weiterverarbeitung von Polymermischungen aus den Komponenten A und B und/oder C des Anspruchs 1 zu Formkörpern auf Extrudern, Spritzgiessmaschinen oder Hochtemperaturpressen, dadurch gekennzeichnet, dass man die Polymermischungen bei Temperaturen von über 270°C verformt.

**Claims**

1. Process for the production of polymer blends of

A - 1 to 99% by weight of a thermoplastic, aromatic tetramethyl-bisphenol-F-containing polycarbonate having average molecular weights $\overline{Mw}$ (weight average) of 10,000 to 200,000 with

B - 99 to 1% by weight of a styrene/acrylonitrile copolymer and/or with

C - 99 to 1% by weight of a graft polymer, consisting of 5 to 95% by weight of a styrene/acrylonitrile copolymer and 95 to 5% by weight of a butadiene rubber containing 0 to 50% by weight of comonomers in addition to butadiene, of an ethylene/propylene/diene rubber or of a rubber of acrylates containing 0 to 30% by weight of other comonomers, produced by the polymerisation of styrene/acrylonitrile blends in the presence of one of the stated rubbers,

the sum of components A + B + C in each case being 100% by weight, in extruders or kneaders, characterised in that

1) the aromatic polycarbonate A contains at least 80% by weight of recurring structural units of the formulae 1 and optionally 2

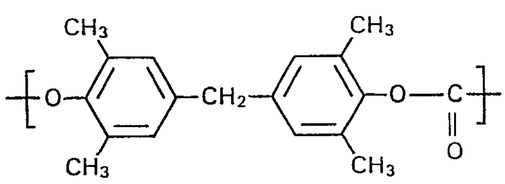 (1)

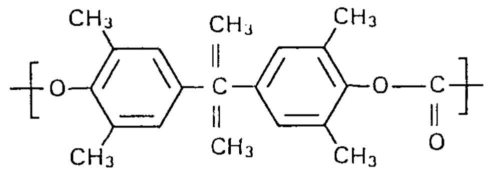 (2)

and at most 20% by weight of recurring structural units of the formula 3,

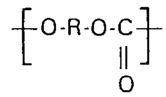 (3)

wherein -O-R-O- is a diphenolate radical with the exception of structures (1) and (2) and wherein the recurring structural units of the formula 1 must amount to at least 25% by weight of the aromatic polycarbonate,
in that

2) the amount of acrylonitrile in the styrene/acrylonitrile copolymer of components B and C is in each case 1.5 to 15% by weight,
and in that

3) mixing is carried out at temperatures of above 270°C.

2. Process for further processing polymer blends of components A and B and/or C of Claim 1 into shaped articles in extruders, injection-moulding machines or high-temperature presses, characterised in that the polymer blends are moulded at temperatures of above 270°C.

**Revendications**

1. Procédé de préparation de mélanges de polymères consistant en:

A - 1 à 99% en poids d'un polycarbonate aromatique thermoplastique contenant du tétraméthylbisphénol-F, à un poids moléculaire moyen $\overline{Mw}$ (moyenne en poids) de 10 000 à 200 000, avec

B - 99 à 1% en poids d'un copolymère styrène/acrylonitrile, et/ou avec

C - 99 à 1% en poids d'un polymère greffé consistant en 5 à 95% en poids d'un copolymère styrène/acrylonitrile et 95 à 5% en poids d'un caoutchouc de butadiène contenant de 0 à 50% en poids de comonomères autres que le butadiène, d'un caoutchouc d'éthylène-propylène-diène ou d'un caoutchouc d'acrylates contenant 0 à 30% en poids d'autres comonomères, préparé par polymérisation de mélanges styrène/acrylonitrile en présence de l'un des caoutchoucs mentionnés,

la somme des composants A + B + C représentant dans chaque cas 100% en poids, sur des extrudeuses ou des malaxeurs, caractérisé en ce que:

1) le polycarbonate aromatique A contient au moins 80% en poids de motifs répétés de formules 1 et le cas échéant 2

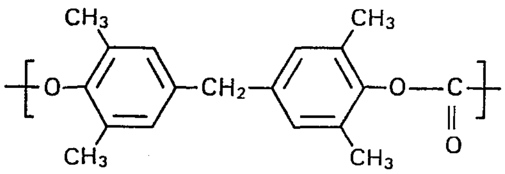
(1)

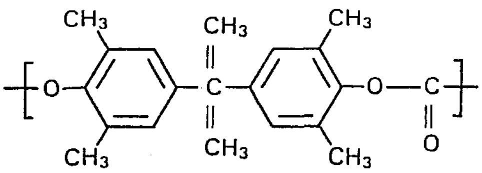
(2)

et au maximum 20% en poids de motifs de structure répétés de formule 3

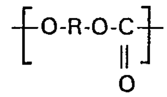
(3)

dans laquelle -O-R-O- représente un reste de diphénolate, à l'exception des structures 1 et 2, et les motifs de structures répétés de formule 1 doivent représenter au moins 25% du poids du polycarbonate aromatique,

2) la proportion d'acrylonitrile dans le copolymère styrène/acrylonitrile des composants B et C est dans les deux cas de 1,5 à 15% en poids, et

3) on mélange à des températures supérieures à 270°C.

2. Procédé pour le façonnage des mélanges de polymère consistant en les composants A et B et/ou C de la revendication 1 en objets moulés sur des extrudeuses, des machines à mouler par injection ou des presses à haute température, caractérisé en ce que l'on façonne les mélanges de polymères à des températures supérieures à 270°C.